# EUROPÄISCHE PATENTSCHRIFT

(11) **EP 1 014 800 B1**
(45) Veröffentlichungstag und Bekanntmachung des Hinweises auf die Patenterteilung: **08.06.2005**
(21) Anmeldenummer: 98948951.3
(22) Anmeldetag: 10.09.1998
(51) Int. Cl.: A23B 4/16, A23B 4/09, A23B 4/24

(54) **VERFAHREN UND VORRICHTUNG ZUR BEHANDLUNG VON FRISCHFLEISCH**
METHOD AND DEVICE FOR PROCESSING FRESH MEAT
PROCEDE ET DISPOSITIF DE TRAITEMENT DE VIANDE/CHAIR FRAICHE

(30) Priorität: 10.09.1997 DE 19739789
(43) Veröffentlichungstag der Anmeldung: 05.07.2000
(73) Patentinhaber: Vivotec New Concepts in Fresh Meat GmbH, 47652 Weeze (DE)
(72) Erfinder: SCHLEGEL, Jürgen, D-79224 Umkirch (DE); VERHAAG, Hubert, D-47623 Kevelaer (DE); SCHWÖRER, Wilfried, F-67390 Artolsheim (FR)
(74) Vertreter: Manitz, Finsterwald & Partner GbR
(86) Internationale Anmeldenummer: PCT/EP1998/005765
(87) Internationale Veröffentlichungsnummer: WO 1999/012428

(56) Entgegenhaltungen:
- WO-A-92/10939
- WO-A-95/10944
- DE-A- 4 114 524
- DE-A- 4 415 184
- US-A- 3 922 358
- PATENT ABSTRACTS OF JAPAN vol. 009, no. 260 (C-309), 17. Oktober 1985 & JP 60 114143 A (FURUKAWA SEISAKUSHO:KK), 20. Juni 1985

## Beschreibung

Die vorliegende Erfindung betrifft ein Verfahren zur Behandlung von Frischfleisch, insbesondere zum Konservieren von frischem Rind-, Schweine-, Kalbs-, Lamm-, Wild-, Geflügel-, Pferdefleisch, Fisch, Rohwurst und Schinken, bei dem das Frischfleisch in einem luftdicht verschließbaren Raum nach Zufuhr von Sauerstoff in einer im wesentlichen aus Sauerstoff bestehenden Atmosphäre während einer vorgebbaren Zeit unter einem über dem Atmosphärendruck liegenden Druck gelagert wird. Weiterhin ist die Erfindung auf eine Vorrichtung zur Durchführung eines solchen Verfahrens gerichtet.

Bei verschiedenen bekannten Verfahren zur Behandlung von Frischfleisch wurde bereits versucht, das Frischfleisch einer Sauerstoffatmosphäre unter erhöhtem Druck auszusetzen, um auf diese Weise die Haltbarkeit des Frischfleisches und insbesondere einen dauerhaften Frischezustand zu erreichen, der sich in einer intensiven roten Fleischfarbe äußert, die auch im freien Zustand des Fleisches mehrere Tage erhalten bleiben soll. Dabei wurde bei einem bekannten Verfahren der aufgebaute Druck über den Lagerungszeitraum mehrmals verringert und wieder neu aufgebaut, während bei einem weiteren bekannten Verfahren der einmal aufgebaute Druck über die gesamte Lagerzeit aufrechterhalten blieb, hierbei jedoch kontinuierlich neuer Sauerstoff zugeführt und entsprechend alter Sauerstoff aus dem das Frischfleisch enthaltenden Raum abgeführt wurde.

Testergebnisse haben jedoch gezeigt, daß mit den bekannten Verfahren keine zuverlässige Verbesserung der Haltbarkeit des Frischfleisches erzielt werden konnte. Zum einen bekamen in vielen Fällen die behandelten Fleischstücke, nachdem sie nach Beendigung der Sauerstoffbehandlung wieder der Umgebungsatmosphäre ausgesetzt wurden, nach relativ kurzer Zeit graue Flecken, die insbesondere an den Kontaktstellen zwischen zwei Fleischstücken besonders schnell hervortraten. Zum anderen waren die Frischfleischstücke nach erfolgter Behandlung in vielen Fällen entweder gefroren oder schwammartig aufgedunsen und mit Blasen besetzt, so daß sie in dem einen Fall gemäß den Lebensmittelrichtlinien nicht mehr als Frischfleisch und im anderen Fall überhaupt nicht mehr in den Verkauf gegeben werden konnten.

Dieser und änlicher Stand der Technik kann den folgenden Dokumenten entnommen werden. WO-A-9510944, WO-A-9210939, US-A-3922358, DE-A-4114524 Patent Abstracts of Japan, vol. 009, no. 260 (c-309) 1985 (JPA-60114 143, und DE-A-4415184).

Eine Aufgabe der Erfindung ist es, ein Verfahren der eingangs genannten Art so auszubilden, daß die gewünschte Haltbarkeit des Frischfleisches und die damit einhergehende intensive rote Fleischfarbe zuverlässig und wiederholbar in praktisch 100 Prozent aller Behandlungen erreicht werden.

Diese Aufgabe wird ausgehend von einem Verfahren der eingangs genannten Art erfindungsgemäß dadurch gelöst, daß beim Zuführen des Sauerstoffs, dessen Temperatur so gewählt und die Zuführgeschwindigkeit so niedrig eingestellt bzw. geregelt werden, daß kein Gefrieren des Frischfleisches erfolgt, daß der Druck während der Lagerung so hoch und die Lagerungszeit so lange gewählt werden, daß das Frischfleisch vollständig von Sauerstoff durchdrungen wird, und daß beim Abführen des Sauerstoffs die Abführgeschwindigkeit so niedrig eingestellt bzw. geregelt wird, daß zum einen kein Gefrieren des Frischfleisches erfolgt und zum anderen der das behandelte Frischfleisch durchsetzende Sauerstoff aus dem Frischfleisch ohne Blasenbildung abgeführt wird. Eine Vorrichtung zur Durchführung des Verfahrens wird in Anspruch 13 definiert.

Erfindungsgemäß wurde herausgefunden, daß es für eine zuverlässige und wiederholbare Verbesserung der Haltbarkeit des Frischfleisches erforderlich ist, daß das Frischfleisch vollständig, d.h. bis in seinen Kern von Sauerstoff durchdrungen werden muß. Nur wenn der Druck, mit dem der Sauerstoff auf die Außenfläche des Frischfleisches auftrifft, so hoch und die Lagerungszeit so lang gewählt werden, daß das Frischfleisch vollständig von Sauerstoff durchdrungen wird, bleibt das behandelte Frischfleisch auch nach Beendigung der Sauerstoffbehandlung für 4 bis 5 Tage von gleichbleibender Qualität, was sich durch eine gleichbleibend intensive rote Fleischfarbe äußert.

Die intensive rote Fleischfarbe wird dadurch erreicht, daß praktisch jede Zelle des Fleisches mit Sauerstoff angereichert wird, wobei das sich nach dem Schlachten in den Zellen gebildete Kohlendioxid durch den Sauerstoff verdrängt wird. Solange auch nur ein minimaler Bereich des behandelten Fleisches nicht von Sauerstoff durchdrungen wird, dehnt sich nach Beendigung der Behandlung und Abbau des auf das Fleisch wirkenden Drukkes das in dem unbehandelten Bereich vorhandene Kohlendioxid durch den gesamten restlichen Bereich des behandelten Frischfleisches aus. Die Behandlung mit Sauerstoff ist in diesem Fall reversibel, so daß nach relativ kurzer Zeit das Kohlendioxid zu der Außenseite des behandelten Fleisches vordringt und dort durch Oxidation grüne oder graue Stellen entstehen.

Nur bei einer vollständigen Durchdringung des Frischfleisches mit Sauerstoff bis in den Kern entsteht ein irreversibler Vorgang, der gewährleistet, daß die gewünschte intensive rote Farbe über mehrere Tage im freien Zustand des Fleisches erhalten bleibt.

Eine weitere, wesentliche Erkenntnis der Erfindung besteht darin, daß ein Gefrieren des Frischfleisches sowohl durch eine zu schnelle Zufuhr des Sauerstoffs bei Beginn der Behandlung als auch durch ein zu schnelles Abführen des Sauerstoffes am Ende der Behandlung verursacht wird. Erfindungsgemäß wird somit sowohl die Zuführgeschwindigkeit als auch die Abführgeschwindigkeit des Sauerstoffs so niedrig eingestellt bzw. geregelt, daß ein Gefrieren des Frischfleisches verhindert wird. Wird die vorgegebene Zuführgeschwindigkeit wesentlich überschritten, so gefriert das Frischfleisch bereits zu Beginn der Behandlung, so daß während der Lagerung der Sauerstoff nicht in das Fleisch eindringen kann und die gewünschte Durchdringung mit Sauerstoff nicht erfolgt.

Wird die Geschwindigkeit beim Abführen des Sauerstoffes zu hoch eingestellt, so können zwei unterschiedliche Effekte eintreten. Zum einen kann auch in diesem Fall ein Gefrieren des Frischfleisches erfolgen, was dazu führt, daß das behandelte Fleisch nach lebensmittelrechtlichen Vorschriften nicht mehr als Frischfleisch bezeichnet werden darf. Zum anderen wird dem Sauerstoff, der sich unter hohem Druck in jeder Zelle des behandelten Frischfleisches befindet, nicht ausreichend Zeit gegeben, aus dem Fleisch in die Umgebungsatmosphäre zu diffundieren. Dies führt dazu, daß bei einem zu schnellen Abführen des Sauerstoffs die Zellen beim Beenden der Behandlung noch mit Sauerstoff unter einem Druck gefüllt sind, der oberhalb des Umgebungsdrucks liegt. Das Fleisch hat in diesem Fall eine aufgeblähte, schwamrnförmige Konsistenz, wobei zusätzlich durch den im Fleisch vorhandenen Überdruck und die im Fleisch vorhandene Feuchtigkeit an der Oberfläche des Fleisches eine Blasen- bzw. Schaumbildung erfolgen kann.

Nach einer weiteren vorteilhaften Ausführungsform der Erfindung erfolgt während der Lagerung des Frischfleisches keine Zu- und Abfuhr von Sauerstoff. Es hat sich gezeigt, daß eine solche Zu- bzw. Abfuhr unnötig ist und die besten und zuverlässigsten Ergebnisse dann erzielt werden, wenn das Fleisch während der Lagerungszeit völlig abgeschlossen unter der Druckeinwirkung des im geschlossenen Raum vorhandenen Sauerstoffes steht.

Weiterhin wird erfindungsgemäß bevorzugt das Frischfleisch in geschnittenen Stücken, insbesondere in Verbraucherportionen behandelt. Da wesentlich ist, daß das zu behandelnde Fleisch vollständig bis in seinen Kern mit Sauerstoff durchsetzt wird, und eine solche vollständige Durchdringung in der Praxis bei ungeschnittenen, großen Fleischstücken nur schwer erreicht werden kann, werden erfindungsgemäß bevorzugt geschnittene Stücke verwendet. Auf diese Weise ist sichergestellt, daß bei den vorgegebenen Parametern, wie Druck und Behandlungsdauer die in den Raum eingebrachten Fleischstücke vollständig bis in ihren Kern von Sauerstoff durchdrungen werden.

Nach einer weiteren bevorzugten Ausführungsform der Erfindung wird beim Zuführen des Sauerstoffs der innerhalb des abgeschlossenen Raums vorhandene Druck gemessen und nach Erreichen eines vorgegebenen Maximaldrucks die Sauerstoffzufuhr beendet. Bevorzugt wird die Sauerstoffatmosphäre dabei in dem abgeschlossenen Raum auf einen Druck von ca. 10 bis 20 bar, insbesondere von ca. 13 bis 17 bar, bevorzugt von ca. 15 bar gebracht und während der Lagerungszeit gehalten. Während ein Druck, der oberhalb eines vorgegebenen Maximaldrucks liegt, technische Probleme bereiten kann, so daß das Gehäuse des verschließbaren Raums sowie die Tür entsprechend stabil und damit kostenaufwendig hergestellt und gesichert sein müssen, ist bei einem Druck unterhalb des vorgegebenen Maximaldrucks nicht gewährleistet, daß das zu behandelnde Fleisch vollständig bis in seinen Kern mit Sauerstoff durchdrungen wird.

Nach einer weiteren vorteilhaften Ausführungsform der Erfindung wird beim Zuführen des Sauerstoffs der Druck im wesentlichen linear, insbesondere in mehreren, vorzugsweise zwischen 10 und 20, insbesondere in ca. 15 Stufen, erhöht. Es hat sich gezeigt, daß bei einer linearen Erhöhung des Drucks, insbesondere in mehreren Stufen, ein besonders zuverlässiges Behandlungsergebnis erzielt wird, wobei gleichzeitig die Gefahr des Gefrierens des Fleisches praktisch auf Null reduziert werden konnte. Es ist jedoch grundsätzlich auch möglich den Druck kontinuierlich zu erhöhen. Wesentlich ist in allen Fällen, daß beim Druckaufbau mit einer im wesentlichen konstanten Literleistung gearbeitet wird, d.h. daß pro aufgebautem bar im wesentlichen die gleiche Menge Sauerstoff zugeführt wird. Dies kann beispielsweise durch die Verwendung von steuerbaren Ventilen gewährleistet werden.

Bevorzugt wird der Sauerstoff in ca. 45 Minuten bis 4 Stunden, insbesondere in ca. 1 bis 3 Stunden, bevorzugt in 1 bis 2 Stunden, zugeführt. Dabei erfolgt in vorteilhafter Weise diese Zuführung kontinuierlich. Während bei kleineren Anlagen, die beispielsweise ein Volumen in der Größenordnung von 100 Litern besitzen, die Zuführung des Sauerstoffs in ca. 1 Stunde erfolgen kann, ist bei größeren Anlagen, die ein Volumen bis zu 50.000 Litern und mehr besitzen können, eine längere Zuführzeit zu verwenden.

Vorteilhaft werden bei einem Raum mit einem Volumen von ca. 100 Liter maximal ca. 70 Liter von Sauerstoff pro Minute, insbesondere maximal ca. 30 bis 60 Liter Sauerstoff pro Minute oder weniger zugeführt. Bei einem Raum mit einem Volumen von ca. 15.000 Litern werden bevorzugt maximal 2.500 Liter Sauerstoff pro Minute, vorteilhaft maximal ca. 1.400 Liter Sauerstoff pro Minute, insbesondere maximal ca. 1.200 Liter Sauerstoff pro Minute oder weniger zugeführt. Werden diese Literleistungen überschritten, so gefriert das im geschlossenen Raum befindliche Fleisch, so daß die Behandlung nicht zu dem gewünschten Ergebnis führt.

Nach einer weiteren vorteilhaften Ausführungsform der Erfindung wird als Lagerungszeit ca. 5 bis 15 Stunden, insbesondere ca. 7 bis 12 Stunden, bevorzugt ca. 8 bis 10 Stunden gewählt. Dabei wird die Lagerungszeit vorteilhaft bei vorgelagertem Fleisch kürzer als bei frisch geschlachtetem Fleisch gewählt. Gegenüber den bekannten Verfahren ist somit die Lagerungszeit deutlich verringert, wodurch zum einen die Flexibilität des Verfahrens und zum anderen die Wirtschaftlichkeit deutlich erhöht wird. Diese Verringerung der Behandlungszeit ist auf die erfindungsgemäße Steuerung der Zu- und Abführgeschwindigkeit des Sauerstoffs sowie die Erkenntnis zurückzuführen, daß nach einem vollständigen Durchdringen des Frischfleisches mit Sauerstoff eine weitere Lagerung innerhalb des unter hohem Druck stehenden Sauerstoffs nicht mehr erforderlich ist, da der Behandlungsvorgang bereits irreversibel geworden ist.

Nach einer weiteren bevorzugten Ausführungsform der Erfindung wird beim Abführen des Sauerstoffs der Druck im wesentlichen linear, insbesondere in mehreren, vorzugsweise zwischen 10 und 20, insbesondere in ca. 15 Stufen, abgesenkt. Dabei wird bevorzugt beim Abführen des Sauerstoffs pro bar Druckabsenkung im wesentlichen die gleiche Zeit, insbesondere ca. 8 bis 20 Minuten, bevorzugt ca. 13 bis 16 Minuten vorgesehen. Wie der Druckaufbau kann der Druckabbau grundsätzlich auch kontinuierlich erfolgen, wobei pro bar Druckabsenkung wiederum im wesentlichen die gleiche Menge Sauerstoff bzw. Sauerstoffgemisch abgeführt wird.

Gerade beim Abführen des Sauerstoffs ist eine kontrollierte Steuerung notwendig, da neben den Gefriereffekten die beschriebenen Aufschäumungseffekte mit Blasenbildung auftreten können. Wird der Sauerstoff so abgeführt, daß der Druckabbau im wesentlichen linear erfolgt, so können diese negativen Effekte vermieden werden.

Bevorzugt wird nach Erreichen eines vorgegebenen Mindestdrucks dieser mit einem höheren Gradienten abgebaut. Der Mindestdruck wird dabei vorteilhaft zwischen 0,5 und 1,2 bar, insbesondere zu ca. 0,7 bar gewählt.

Wird der Mindestdruck zu hoch gewählt, beispielsweise zu 1,5 bar, so wird das Fleisch bei Erhöhung des Druckabbaugradienten ab ca. 1 bar gefrieren bzw. aufschäumen, auch wenn bis zu diesem Druck der Druckabbau langsam genug erfolgte. Ab dem vorgegebenen korrekten Mindestdruck kann ein die Sauerstoffabfuhr begrenzendes Ablaßventil praktisch vollständig geöffnet werden, ohne daß ein Gefrieren des Frischfleisches erfolgt.

Bevorzugt wird der Sauerstoff in ca. 1 bis 4 Stunden, insbesondere in ca. 3 Stunden abgeführt. Diese gegenüber den bekannten Verfahren erhöhten Werte gewährleisten, daß zum einen kein Gefrieren des Frischfleisches erfolgt, und zum anderen dem in den Zellen des Frischfleisches enthaltenen Sauerstoff ausreichend Zeit gegeben wird, ohne Blasenbildung aus dem Fleisch auszutreten und den im Fleisch vorhandenen Überdruck abzubauen.

Nach einer weiteren bevorzugten Ausführungsform der Erfindung wird der Sauerstoff dem geschlossenen Raum ohne vorherige Abführung des der Umgebungsatmosphäre entsprechenden Gasgemisches zugeführt. Das unter Umgebungsdruck zu Beginn der Behandlung in dem geschlossenen Raum vorhandene Gasgemisch wird durch den unter hohem Druck eingeführten Sauerstoff komprimiert und mit dem eingeführten Sauerstoff vermischt. Bei einer ausreichend hohen Reinheit des eingeführten Sauerstoffs, die beispielsweise wenigstens 50%, insbesondere wenigstens 90%, bevorzugt wenigstens 95% beträgt, ist gewährleistet, daß das während der Lagerung in dem Raum vorhandene Gasgemisch einen ausreichend hohen Sauerstoffgehalt von wenigstens 50%, insbesondere von wenigstens 90%, bevorzugt von wenigstens 95% besitzt.

Grundsätzlich ist es jedoch auch möglich, daß vor Zuführen des Sauerstoffs das in dem geschlossenen Raum enthaltene, der Umgebungsatmosphäre entsprechende Gasgemisch bis zur Erzeugung eines vorgegebenen Unterdrucks abgeführt wird. Auf diese Weise kann bei Einführen von Sauerstoff eines entsprechend hohen Reinheitsgrades das während der Lagerung innerhalb des abgeschlossenen Raums vorhandene Gasgemisch einen noch höheren Sauerstoffanteil besitzen.

Weitere vorteilhafte Ausführungsformen der Erfindung sowie eine Vorrichtung zur Durchführung des erfindungsgemäßen Verfahrens sind in den Unteransprüchen angegeben.

Die Erfindung wird nachfolgend anhand eines Ausführungsbeispiels unter Bezugnahme auf die Zeichnungen näher beschrieben; in diesen zeigen:
- Fig. 1: eine schematische Darstellung einer zur Durchführung des erfindungsgemäßen Verfahrens geeigneten Vorrichtung mit einem Gehäuse zur Aufnahme des zu behandelnden Fleisches und
- Fig. 2: eine schematische Seitenansicht eines in das Gehäuse nach Fig. 1 einfahrbaren Trägergestells.

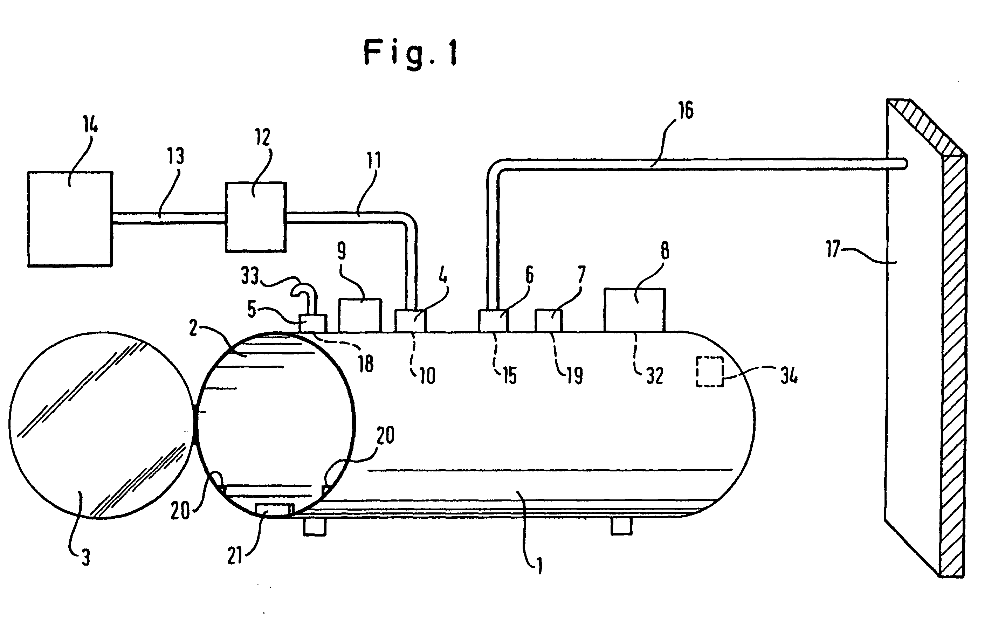

Fig. 1 zeigt ein vorzugsweise aus einer Schweißkonstruktion bestehendes, geschlossen ausgebildetes, zylindrisches Gehäuse 1 mit einer beladeseitigen Öffnung 2, die mittels einer Gehäusetür 3 dicht verschließbar ist. An der Oberseite des Gehäuses 1 sind Zuführventile 4, 5, Abführventile 6, 7, eine Evakuierungspumpe 8 sowie eine elektronische Steuereinheit 9 angebracht.

Das Zuführventil 4 ist über eine Sauerstoff-Einlaßöffnung 10 mit dem Inneren des Gehäuses 1 und über eine Rohrleitung oder einen Schlauch 11 mit einem Sauerstoffverdampfer 12 verbunden. Der Sauerstoffverdampfer 12 ist wiederum über eine Rohrleitung oder einen Schlauch 13 mit einem Sauerstofftank 14 verbunden. Der Sauerstofftank 14 kann dabei je nach Bedarf als Großraumtank oder auch als einfache Sauerstoffflasche ausgebildet sein. Bei Verwendung einer Sauerstoffflasche, in der der Sauerstoff üblicherweise in gasförmigem Zustand vorliegt, kann der Verdampfer 12 entfallen. Sauerstoffflaschen können dabei bevorzugt bei kleineren Anlagen verwendet werden. Grundsätzlich kann der Sauerstoff auch beispielsweise über eine externe Sauerstoffleitung geliefert oder durch einen Sauerstofferzeuger erzeugt werden, so daß der Sauerstofftank 14 in diesen Fällen entfallen kann. Je nach Aggregatzustand des bereitgestellten Sauerstoffs kann dabei ein Sauerstoffverdampfer zur Erzeugung von gasförmigem Sauerstoff erforderlich sein.

Das Abführventil 6 ist über eine Sauerstoff-Abführöffnung 15 mit dem Inneren des Gehäuses 1 und über eine Rohrleitung 16, die beispielsweise durch eine Außenwand 17 geführt ist, mit der Umgebungsatmosphäre verbunden.

Die Zuführ- und Abführventile 5 und 7 sind ebenfalls jeweils über Sauerstoff-Einlaß- bzw. -Abführöffnungen 18, 19 mit dem Inneren des Gehäuses 1 verbunden, so daß beim Öffnen dieser Ventile 5 und 7 das Innere des Gehäuses 1 mit der Umgebungsatmosphäre in Verbindung steht. Die Evakuierungspumpe 8 ist über eine Evakuierungsöffnung 32 mit dem Inneren des Gehäuses 1 verbunden, so daß das jeweils in dem Gehäuse 1 befindliche Gasgemisch durch die Evakuierungspumpe 8 abgezogen werden kann.

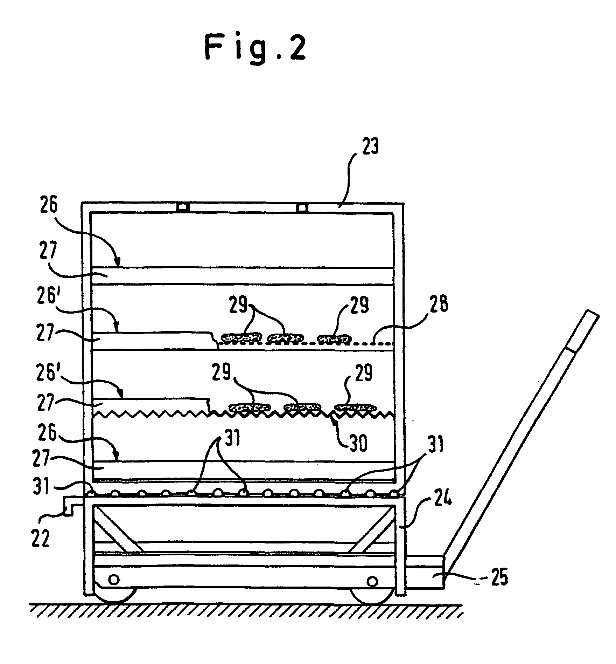

Im Inneren des Gehäuses 1 sind zwei Führungsschienen 20 vorgesehen, die sich an den Seitenwänden horizontal im wesentlichen über die gesamte Länge des Gehäuses 1 erstrecken. Im unteren Bereich der Öffnung 2 ist ein Andockabschnitt 21 ausgebildet, der mit einem in Fig. 2 dargestellten Andockgegenstück 22 koppelbar ist.

In Fig. 2 ist ein aus einer Schweißkonstruktion bestehendes Trägergestell 23 dargestellt, das auf einem Untergestell 24 angeordnet ist. Das Untergestell 24 ist wiederum auf einem fahrbaren Hubwagen 25 angeordnet, so daß das Trägergestell 23 zusammen mit dem Untergestell 24 über den Hubwagen 25 verfahrbar sind.

Im Inneren des Trägergestells 23 sind vier Ablageschalen 26, 26' angeordnet, die jeweils einen nach oben gezogenen Rand 27 besitzen, der bei den beiden mittleren Ablageschale 26' in der Fig. 2 teilweise weggebrochen dargestellt ist. In Fig. 2 sind lediglich zur Vereinfachung nur vier Ablageschalen dargestellt. In der Praxis können mehrere hundert Ablageschalen in einem Trägergestell angeordnet sein.

In der oberen Ablageschale 26' sind mit Löchern durchsetzte Ablageroste 28 vorgesehen, auf denen in Verbraucherportionen geschnittene Fleischstücke 29 nebeneinanderliegend angeordnet sind. Durch die Löcher in den Ablagerosten 28 und den zwischen den Ablagerosten 28 und dem Boden der Ablageschalen 26, 26' vorhandenen Abstand ist gewährleistet, daß die Fleischstücke 29 allseitig für den im Innenraum des Gehäuses 1 vorhandenen Sauerstoff zugänglich sind und demgemäß der Sauerstoff ungehindert in die Fleischstücke 29 eindiffundieren kann.

Eine weitere mögliche Ausbildung der Ablageschalen ist durch die untere Ablageschale 26' dargestellt. Diese Ablageschale 26' besitzt im wesentlichen über seine ganze Länge ein zick-zack-förmiges Profil 30, so daß die Fleischstücke 29 nur auf den obenliegenden Kanten des Profils aufliegen und der Sauerstoff im wesentlichen ungehindert durch die langgestreckten Vertiefungen an die Unterseite der Fleischstücke gelangen kann. Somit ist auch bei dieser Ausbildung der Ablageschalen gewährleistet, daß die Fleischstücke 29 allseitig für den im Innenraum des Gehäuses 1 vorhandenen Sauerstoff zugänglich sind und demgemäß der Sauerstoff ungehindert in die Fleischstücke 29 eindiffundieren kann. Ein Einlegen von Ablagerosten erübrigt sich in diesem Fall. Typische Werte für die Höhe des zick-zack-förmigen Profils können beispielsweise ca. 10mm und für die Abstände zwischen zwei nebeneinanderliegenden Auflagekanten ca. 8 bis 10mm sein. Ist das Gehäuse 1 nicht wie in Fig. 1 dargestellt liegend, sondern stehend angeordnet, so können anstelle der Ablageschalen von oben in das Gehäuse einsetzbare Einlegekörbe vorgesehen sein, die mit Lochblechen im Einlageboden versehen sind.

An der Unterseite des Trägergestells 23 ist eine Vielzahl von Rollen 31 vorgesehen, über die das Trägergestell 23 auf dem Untergestell 24 verschiebbar ist.

Beim Heranschieben des Hubwagens 25 mit dem darauf befindlichen Trägergestell 23 und dem Untergestell 24 an das Gehäuse 1 bei geöffneter Gehäusetür 3 wird das an der Vorderseite des Untergestells 24 angeordnete Andockgegenstück 22 soweit in die Öffnung 2 hineingeschoben, bis es den im Öffnungsbereich vorgesehenen Andockabschnitt 21 übergreift. Anschließend werden das Trägergestell 23 und das Untergestell 24 über den Hubwagen 25 abgesenkt, bis die Füße des Untergestells 24 auf dem Boden aufsetzen. Dabei wird der Andockabschnitt 21 von dem Andockgegenstück 22 hintergriffen, so daß das Untergestell 24 mit dem Gehäuse 1 verkoppelt ist.

Die Höhe des Untergestells 24 ist so gewählt, daß nach Absetzen des Untergestells 24 die Rollen 31 des Trägergestells 23 in Höhe der im Inneren des Gehäuses 1 seitlich angebrachten Führungsschienen 20 zu liegen kommen, so daß das Trägergestell 23 von dem Untergestell 24 herab und auf den Führungsschienen 20 in das Innere des Gehäuses 1 geschoben werden kann.

Die Ventile 4 und 6 sind jeweils bevorzugt als steuerbare Magnetventile ausgebildet, die zum jeweils einen veränderbaren Öffnungsquerschnitt besitzen und zum anderen zum Sperren der Sauerstoffzu- oder -abfuhr jeweils vollständig verschließbar sind. Die Ventile 5 und 7 können hingegen als einfach Absperrventile ausgebildet sein. An dem Ventil 5 ist eine bogenförmig nach unten gekrümmte Rohrleitung 33 angeschlossen, durch die verhindert wird, daß Wasser oder Schmutz durch das Ventil 5 in das Innere des Gehäuses eindringen können. Im Inneren des Gehäuses 1 ist ein gestrichelt angedeuteter Druckmesser 34 zur Messung des Innendrucks vorgesehen.

Im folgenden wird das erfindungsgemäße Verfahren anhand der in den Figuren dargestellten Vorrichtung näher beschrieben:

Die zu behandelnden Fleischstücke 29 werden auf die Ablageroste 28 bzw. die Ablageschalen 26, 26' gelegt, so daß jedes der Fleischstücke 29 allseitig von der das Fleischstück 29 umgebenden Gasatmosphäre erreichbar ist. Die Ablageroste 28 werden in die Ablageschalen 26, 26' eingesetzt und innerhalb des Trägergestells 23 zusammen mit dem Untergestell 24 über den Hubwagen 25 an die geöffnete Tür 3 des Gehäuses 1 herangefahren. Anschließend wird das Trägergestell 23 zusammen mit dem Untergestell 24 über den Hubwagen 25 abgesenkt, so daß das Untergestell 24 über den Andockabschnitt 21 und das Andockgegenstück 22 mit dem Gehäuse 1 unverschiebbar verkoppelt ist.

Das Trägergestell 23 wird von dem Untergestell 24 auf die Führungsschienen 20 und entlang dieser in das Innere des Gehäuses 1 verschoben. Auf diese Weise können beispielsweise bis zu sechs Trägergestelle 23 hintereinander in das Gehäuse 1 verschoben werden, so daß bei beispielsweise 61 Ablageschalen pro Trägergestell bis zu 366 Ablageschalen in das Gehäuse 1 eingeschoben werden können.

Nachdem alle Trägergestelle 23 in das Gehäuse 1 eingeschoben sind, wird die Gehäusetür 3 geschlossen und beispielsweise über einen Bajonettverschluß gas- und druckdicht verriegelt.

In diesem Anfangszustand sind die Magnetventile 4, 5, 6 und 7 geschlossen.

Anschließend wird der Innenraum des Gehäuses 1 durch die Evakuierungspumpe 8 so lange evakuiert, bis der gewünschte Unterdruck innerhalb des Gehäuses 1 erreicht wird.

Nach Beendigung der Evakuierung des Gehäuseinnenraums wird das Magnetventil 4 geöffnet, so daß der unter Überdruck stehende Sauerstoff aus dem Sauerstofftank 14 über die Rohrleitung 13 zu dem Verdampfer 12 fließen kann. Der in flüssiger Form in dem Sauerstofftank 14 gespeicherte Sauerstoff wird in dem Verdampfer 12 in seinen gasförmigen Zustand umgewandelt, so daß er über die Rohrleitung 11 und das Zuführventil 4 in den Innenraum des Gehäuses 1 strömen kann.

Grundsätzlich ist es auch möglich, den Sauerstoff ohne vorherige Evakuierung in das Gehäuseinnere einzuführen. In diesem Fall kann die Evakuierungspumpe 8 entweder vollständig entfallen oder nur bei der weiter unten beschriebenen Abführung des Restsauerstoffs aus dem Gehäuseinneren verwendet werden.

Bei der Zuführung von Sauerstoff aus dem Sauerstofftank 14 wird das Magnetventil 4 so gesteuert, daß eine vorgegebene Einströmgeschwindigkeit des Sauerstoffs in das Innere des Gehäuses 1 nicht überschritten wird.

Die Zuführung des Sauerstoffs wird dabei durch Steuerung des Magnetventils 4 geregelt. An dem Magnetventil 4 liegt eine durch die elektronische Steuereinheit 9 geregelte Steuerspannung an, durch die der Öffnungsquerschnitt des Magnetventils 4 regelbar ist. Durch stufenweises Erhöhen der Steuerspannung beispielsweise ausgehend von 0,5 Volt jeweils um einen Wert von beispielsweise 0,2 Volt wird ein lineares Ansteigen des in dem Gehäuse vorhandenem Sauerstoffdrucks erreicht, wodurch ein Gefrieren der Fleischstücke 29 durch zu schnell einströmenden Sauerstoff verhindert wird.

Der im Inneren des Gehäuses 1 ansteigende Druck wird durch den Druckmesser 34 gemessen und an die elektronische Steuereinheit 9 weitergeleitet. Nachdem der gewünschte Innendruck von beispielsweise ca. 15 bar erreicht ist, wird das Magnetventil 4 durch die elektronische Steuereinheit 9 geschlossen, so daß das Gehäuse 1 gegenüber der Umgebung luftdicht abgeschlossen ist. In diesem Zustand beträgt der Reinheitsgrad des in dem Gehäuse 1 befindlichen Sauerstoffgases bevorzugt über 93%.

Die hochreine Sauerstoffatmosphäre wirkt unter dem hohen Druck auf die Fleischstücke 29 ein und durchdringt diese aufgrund des hohen Druckes vollständig bis in ihren Kern. Dabei wird das in den Zellen der Fleischstücke 29 befindliche Kohlendioxid durch den Sauerstoff verdrängt, so daß nach ca. 8 bis 12 Stunden Lagerzeit alle Zellen der Fleischstücke 29 mit Sauerstoff angefüllt sind.

Nach dieser Lagerzeit wird das Magnetventil 6 durch die elektrische Steuereinheit 9 angesteuert, wobei auch hier eine Erhöhung der an dem Magnetventil 6 anliegenden Steuerspannung durch die elektrische Steuereinheit 9 zu einer Vergrößerung des wirksamen Strömungsquerschnitts des Magnetventils 6 führt. Die Steuerspannung wird wiederum beispielsweise ausgehend von einem Anfangswert von 0,5 Volt in Schritten von beispielsweise ca. 0,2 Volt erhöht, wodurch ein im wesentlichen linearer Druckabbau erfolgt. Die Steuerspannung wird dabei in solchen Zeitabständen erhöht, daß ca. alle 16 Minuten der in dem Gehäuse 1 vorhandene Innendruck um 1 bar abgebaut wird.

Wenn nach ca. 3 Stunden der Innendruck auf 0,7 bar abgefallen ist, wird das Magnetventil 6 vollständig geöffnet, so daß der in dem Gehäuse 1 noch vorhandene restliche Überdruck vollständig abgebaut wird. Zur schnelleren vollständigen Entleerung des Gehäuses 1 kann zusätzlich das Magnetventil 7 geöffnet werden, das einen besonders großen Öffnungsquerschnitt besitzt.

Da auch nach diesem Druckabbau die in dem Gehäuse 1 vorhandene Atmosphäre praktisch aus reinem Sauerstoff besteht, wird vor Öffnen der Gehäusetür 3 die hochkonzentrierte Sauerstoffatmosphäre aus dem Gehäuse 1 über die Evakuierungspumpe 8 abgezogen. Dazu wird im zyklischen Wechsel die Evakuierungspumpe 8 betätigt und das Magnetventil 5 geöffnet, so daß durch den jeweils im Inneren des Gehäuses 1 erzeugten Unterdruck, der beispielsweise 50 mbar unterhalb des Umgebungsdrucks liegt, Umgebungsatmosphäre über das Ventil 5 in das Gehäuse 1 eingesogen wird. Nach beispielsweise 20 Minuten zyklischen Wechsels ist der reine Sauerstoff praktisch vollständig aus dem Gehäuseinneren abgezogen, so daß das im Inneren des Gehäuses 1 vorhanden Gasgemisch der Umgebungsatmosphäre entspricht und die Gehäusetür 3 gefahrlos geöffnet werden kann.

Nach Öffnen der Gehäusetür 3 können die behandelten Fleischstücke 29 aus dem Gehäuse 1 entnommen werden.

Es ist grundsätzlich auch möglich, das Ventil 5 während des Betriebs der Evakuierungspumpe 8 offen zu lassen, so daß kontinuierlich Umgebungsatmosphäre in das Gehäuseinnere eingeführt wird. Weiterhin können die Ventile 4 und 6 auch zusammengefaßt als ein einziges, steuerbares Ventil ausgebildet sein. In diesem Fall kann sowohl die Zuführung als auch die Abführung des Sauerstoffs über ein einziges, an dem Gehäuse vorgesehenes Ventil erfolgen. Die Rohrleitungen 11 und 16 müssen in diesem Fall beispielsweise über eine T-Verbindung und separate Absperrventile mit dem Ventil verbunden sein. Ebenso können die Ventile 5 und 7 als ein einziges Ventil ausgebildet sein.

Durch die Sauerstoffbehandlung, bei der die Fleischstücke 29 bis in ihren Kern mit Sauerstoff durchdrungen wurden, besitzen die Fleischstücke 29 eine intensive rote Fleischfarbe, die sich auch im freien Zustand in der Umgebungsatmosphäre über einen Zeitraum von 4 bis 5 Tagen erhält. Dabei ist es auch möglich, das behandelte Frischfleisch nach Beendigung der Behandlung in übliche Vakuumverpackungen einzuschweißen und anschließend einzufrieren bzw. zunächst einzufrieren und anschließend in Vakuumverpackungen zu verschweißen. Während unbehandeltes Fleisch beim Einfrieren üblicherweise eine braune Färbung annimmt, behält das erfindungsgemäß behandelte Fleisch seine intensive rote Farbe auch im eingefrorenen Zustand bei, so daß auch in diesem Fall der optische frische Eindruck des behandelten Frischfleisches gegenüber unbehandeltem Fleisch deutlich verbessert werden kann.

## Patentansprüche

1. Verfahren zur Behandlung von Frischfleisch, insbesondere zum Konservieren von frischem Rind-, Schweine-, Kalb-, Lamm-, Wild-, Geflügel-, Pferdefleisch, Fisch, Rohwurst und Schinken, bei dem das Frischfleisch in einem luftdicht verschließbaren Raum nach Zufuhr von Sauerstoff in einer im wesentlichen aus Sauerstoff bestehenden Atmosphäre während einer vorgebbaren Zeit unter einem über dem Atmosphärendruck liegenden Druck gelagert wird,
**dadurch gekennzeichnet,**
**daß** beim Zuführen des Sauerstoffs dessen Temperatur so gewählt und die Zuführgeschwindigkeit so niedrig eingestellt bzw. geregelt werden, daß kein Gefrieren des Frischfleisches erfolgt,
**daß** der Druck während der Lagerung so hoch und die Lagerungszeit so lange gewählt werden, daß das Frischfleisch vollständig von Sauerstoff durchdrungen wird, und
**daß** beim Abführen des Sauerstoffs die Abführgeschwindigkeit so niedrig eingestellt bzw. geregelt wird, daß zum einen kein Gefrieren des Frischfleisches erfolgt und zum anderen der das behandelte Frischfleisch durchsetzende Sauerstoff aus dem Frischfleisch ohne Blasenbildung abgeführt wird.

2. Verfahren nach Anspruch 1,
**dadurch gekennzeichnet,**
**daß** während der Lagerung keine Zu- und Abfuhr von Sauerstoff erfolgt und/oder daß das Frischfleisch in geschnitten Stücken, insbesondere in Verbraucherportionen behandelt wird und/oder daß beim Zuführen des Sauerstoffs der innerhalb des abgeschlossenen Raums vorhandene Druck gemessen und nach Erreichen eines vorgegebenen Maximaldrucks die Sauerstoffzufuhr beendet wird.

3. Verfahren nach einem der vorhergehenden Ansprüche,
**dadurch gekennzeichnet,**
**daß** die Sauerstoffatmosphäre in dem abgeschlossenen Raum auf einen Druck von ca. 10 bis 20 bar, insbesondere von ca. 13 bis 17 bar, bevorzugt von ca. 15 bar gebracht und während der Lagerungszeit gehalten wird und/oder daß beim Zuführen des Sauerstoffs der Druck im wesentlichen linear, insbesondere kontinuierlich oder in mehreren, vorzugsweise zwischen 10 und 20, insbesondere in ca. 15 Stufen, erhöht wird und/oder daß der Sauerstoff in ca. 45 Minuten bis 4 Stunden, insbesondere in ca. 1 bis 3 Stunden, bevorzugt in 1 bis 2 Stunden, insbesondere kontinuierlich zugeführt wird.

4. Verfahren nach einem der vorhergehenden Ansprüche,
**dadurch gekennzeichnet,**
**daß** bei einem Raum mit einem Volumen von ca. 100 Liter maximal ca. 70 Liter Sauerstoff pro Minute, insbesondere maximal ca. 30 bis 60 Liter Sauerstoff pro Minute oder weniger zugeführt werden und/oder daß bei einem Raum mit einem Volumen von ca. 15000 Liter maximal ca. 2500 Liter Sauerstoff pro Minute, vorteilhaft maximal ca. 1400 Liter Sauerstoff pro Minute, insbesondere maximal ca. 1200 Liter Sauerstoff pro Minute oder weniger zugeführt werden.

5. Verfahren nach einem der vorhergehenden Ansprüche,
**dadurch gekennzeichnet,**
**daß** als Lagerungszeit ca. 5 bis 15 Stunden, insbesondere ca. 7 bis 12 Stunden, bevorzugt ca. 8 bis 10 Stunden gewählt wird und/oder daß die Lagerungszeit bei vorgelagertem Fleisch kürzer als bei frisch geschlachtetem Fleisch gewählt wird.

6. Verfahren nach einem der vorhergehenden Ansprüche,
**dadurch gekennzeichnet,**
**daß** beim Abführen des Sauerstoffs der Druck im wesentlichen linear, insbesondere kontinuierlich oder in mehreren, vorzugsweise zwischen 10 und 20, insbesondere in ca. 20 Stufen, abgesenkt wird und/oder daß beim Abführen des Sauerstoffs pro Bar Druckabsenkung im wesentlichen die gleiche Zeit, insbesondere ca. 8 bis 20 Minuten, bevorzugt ca. 13 bis 16 Minuten vorgesehen wird.

7. Verfahren nach einem der vorhergehenden Ansprüche,
**dadurch gekennzeichnet,**
**daß** nach Erreichen eines vorgegebenen Mindestdrucks von bevorzugt zwischen ca. 0,5 und 1,2 bar, insbesondere von ca. 0,7 bar, dieser mit einem höheren Gradienten abgebaut wird.

8. Verfahren nach einem der vorhergehenden Ansprüche,
**dadurch gekennzeichnet,**
**daß** der Sauerstoff in ca. 1 bis 4 Stunden, insbesondere in ca. 3 Stunden abgeführt wird und/oder daß die Zu- und/oder Abfuhr des Sauerstoffs über ein steuerbares Ein- bzw. Auslaßventil durchgeführt wird.

9. Verfahren nach den Ansprüchen 7 und 8,
**dadurch gekennzeichnet,**
**daß** nach Erreichen des Mindestdruckes das Auslaßventil im wesentlichen vollständig und/oder ein weiteres einen großen Öffnungsquerschnitt besitzendes Auslaßventil geöffnet wird.

10. Verfahren nach einem der vorhergehenden Ansprüche,
**dadurch gekennzeichnet,**
**daß** der Sauerstoff dem geschlossenen Raum ohne vorherige Abführung des der Umgebungsatmosphäre entsprechenden Gasgemisches zugeführt wird oder daß vor Zuführen des Sauerstoffs das in dem geschlossenen Raum enthaltene, der Umgebungsatmosphäre entsprechende Gasgemisch bis zur Erzeugung eines vorgegebenen Unterdrucks abgeführt wird.

11. Verfahren nach einem der vorhergehenden Ansprüche,
**dadurch gekennzeichnet,**
**daß** der zugeführte Sauerstoff einen Reinheitsgrad von wenigstens 50 %, insbesondere von wenigstens 90 %, bevorzugt von wenigstens 95 % besitzt und/oder daß die Sauerstoffatmosphäre während der Lagerung einen Reinheitsgrad von wenigstens 50 %, insbesondere von wenigstens 90 %, bevorzugt von wenigstens 95 % besitzt.

12. Verfahren nach einem der vorhergehenden Ansprüche,
**dadurch gekennzeichnet,**
**daß** das Frischfleisch in gekühltem Zustand, insbesondere mit einer Temperatur im Bereich von ca. 0°C bis 3°C, in den verschließbaren Raum eingebracht wird und daß die Temperatur in dem geschlossenen Raum während der Lagerung vorzugsweise in einem Bereich von ca. -5°C bis +3°C gehalten wird.

13. Vorrichtung ausgebildet zur Durchführung des Verfahrens nach einem der vorhergehenden Ansprüche,
**gekennzeichnet durch**
ein Gehäuse (1), in dem eine luftdicht verschließbare Öffnung (2) zum Einbringen/Herausnehmen des Frischfleisches (29) auf einem Trägergestell (23), eine an zumindest eine Sauerstoffzuführung (14, 12) anschließbare, insbesondere deckenseitig mündende Einlaßöffnung (10) und zumindest eine eine definierte Abströmung aus dem Innenraum des Gehäuses (1) gewährleistende Abführöffnung (15), die insbesondere deckenseitig angeordnet ist, vorgesehen sind, sowie eine elektronische Steuereinheit, über die zum einen die Temperatur des über die Einlassöffnung zugeführten Sauerstoffs so wählbar und dessen Zuführgeschwindigkeit so niedrig einstellbar bzw. regelbar ist, dass kein Gefrieren des Frischfleisches erfolgt, und zum anderen die Abführgeschwindigkeit des über die Abführöffnung abführbahren Sauerstoffs so niedrig einstellbar bzw. regelbar ist, dass zum einen kein Gefrieren des sich innerhalb des Gehäuses befindenden Frischfleisches erfolgt und zum anderen der das behandelte Frischfleisch durchsetzende Sauerstoff aus dem Frischfleisch ohne Blasenbildung abführbar ist.

14. Vorrichtung nach Anspruch 13,
**dadurch gekennzeichnet,**
**daß** an der Einlaßöffnung (10) zum Zuführen von Sauerstoff ein regelbares Zuführventil, insbesondere ein Magnetventil (4) vorgesehen ist, über das die Zuführmenge pro Zeiteinheit und/oder Zuführgeschwindigkeit des Sauerstoffs regelbar ist, und/oder daß an der Abführöffnung (15) zum Abführen der unter hohem Druck stehenden Sauerstoffatmosphäre ein regelbares Abführventil, insbesondere ein Magnetventil (6) vorgesehen ist, über das die Abführmenge pro Zeiteinheit und/oder die Abführgeschwindigkeit des Sauerstoffs regelbar ist.

15. Vorrichtung nach einem der Ansprüche 13 oder 14,
**dadurch gekennzeichnet,**
**daß** über die elektronische Steuereinheit (9) der Öffnungsquerschnitt des Zuführventils (4) und/oder des Abführventils (6) regelbar sind, und/oder daß das Gehäuse (1) rechteckig oder zylindrisch ausgebildet ist, wobei die Öffnung (2) zum Einbringen/Herausnehmen des Frischfleisches (29) jeweils in den Stirnflächen des Gehäuses (1) vorgesehen sind.

16. Vorrichtung nach einem der Ansprüche 13 bis 15,
**dadurch gekennzeichnet,**
**daß** zum luft- und druckdichten Verschließen der Gehäusetür (3) ein Bajonettverschluß vorgesehen ist und/oder daß zum luft- und druckdichten Verschließen der Öffnung (2) durch die Gehäusetür (3) ein Bajonettverschluß vorgesehen ist und/oder daß die Zuführung des Sauerstoffs über eine innerhalb oder außerhalb des Gehäuses (1) angeordnete Sauerstoffverteilungsvorrichtung erfolgt, die insbesondere aus sternförmig angeordneten, d.h. radial abstehenden Rohrelementen besteht.

17. Vorrichtung nach einem der Ansprüche 13 bis 16,
**dadurch gekennzeichnet,**
**daß** das Gehäuse (1) zur Abführung des der Umgebungsatmosphäre entsprechenden Gasgemisches eine vorzugsweise an der Decke angeordnete Evakuierungsöffnung (32) aufweist und/oder daß zur Speicherung von Sauerstoff ein außerhalb des Gehäuses (1) angeordneter Sauerstofftank (14) vorgesehen ist, der insbesondere über einen Sauerstoffverdampfer (12) und über eine mittels des Magnetventils (4) verschließbare Rohrleitung (11, 13) mit der Einlaßöffnung (10) verbunden ist.

## Claims

1. A method for the treatment of fresh meat, in particular for preserving fresh beef, pork, veal, lamb, game, poultry, horsemeat, fish, raw sausage and ham, in which the fresh meat is stored for a presettable time at a pressure above atmospheric pressure in a chamber capable of being sealed in an air-tight manner after supply of oxygen in an atmosphere substantially consisting of oxygen,
**characterized in that**,
on the supply of the oxygen, its temperature is selected and the feed rate is set or controlled to be so low that the fresh meat does not freeze;
**in that** the pressure during the storage is selected to be so high and the storage time so long that the fresh meat is completely permeated by oxygen; and
**in that**, on the removal of the oxygen, the removal rate is set or controlled to be so low that, firstly, the fresh meat does not freeze and, secondly, the oxygen permeating the treated fresh meat is removed from the fresh meat without bubble formation.

2. A method in accordance with claim 1, **characterized in that**, during the storage, no supply and removal of oxygen takes place; and/ or **in that** the fresh meat is treated in cut pieces, in particular in consumer portions; and/or **in that**, on supply of the oxygen, the pressure present within the sealed-off chamber is measured and, after reaching a preset maximum pressure, the oxygen supply is terminated.

3. A method in accordance with any one of the preceding claims, **characterized in that** the oxygen atmosphere in the sealed-off chamber is brought to a pressure of approximately 10 to 20 bar, in particular approximately 13 to 17 bar, preferably approximately 15 bar, and is maintained during the storage time; and/or **in that**, on supply of the oxygen, the pressure is increased in a substantially linear manner, in particular continuously or in a plurality of steps, preferably between 10 and 20, in particular in approximately 15 steps; and/or **in that** the oxygen is supplied within approximately 45 minutes to 4 hours, in particular within approximately 1 to 3 hours, preferably within 1 to 2 hours, in particular continuously.

4. A method in accordance with any one of the preceding claims, **characterized in that**, in a chamber having a volume of approximately 100 liters, a maximum of approximately 70 liters of oxygen per minute, in particular a maximum of approximately 30 to 60 liters of oxygen per minute, or less, is supplied; and/or **in that**, in the case of a chamber having a volume of approximately 15,000 liters, a maximum of approximately 2500 liters of oxygen per minute is supplied, advantageously a maximum of approximately 1400 liters of oxygen per minute, in particular a maximum of approximately 1200 liters of oxygen per minute or less.

5. A method in accordance with any one of the preceding claims, **characterized in that** the storage time is selected to be approximately 5 to 15 hours, in particular approximately 7 to 12 hours, preferably approximately 8 to 10 hours; and/or **in that** the storage time in the case of meat stored in advance is selected to be shorter than in the case of freshly slaughtered meat.

6. A method in accordance with any one of the preceding claims, **characterized in that**, on removal of the oxygen, the pressure is decreased substantially linearly, in particularly continuously, or in a plurality of steps, preferably between 10 and 20, in particular in approximately 20, steps; and/or **in that**, on removal of the oxygen, substantially the same time, in particular approximately 8 to 20 minutes, preferably approximately 13 to 16 minutes, is provided per bar of pressure decrease.

7. A method in accordance with any one of the preceding claims, **characterized in that**, after reaching a preset minimum pressure of preferably between approximately 0.5 and 1.2 bar, in particular approximately 0.7 bar, this pressure is reduced at a higher gradient.

8. A method in accordance with any one of the preceding claims, **characterized in that** the oxygen is removed within approximately 1 to 4 hours, in particular within approximately 3 hours; and/or **in that** the supply and/or removal of the oxygen is carried out via a controllable inlet or outlet valve.

9. A method in accordance with claim 7 and claim 8, **characterized in that**, after reaching the minimum pressure, the outlet valve is substantially completely opened and/or a further outlet valve having a large opening cross-section is opened.

10. A method in accordance with any one of the preceding claims, **characterized in that** the oxygen is supplied to the closed chamber without prior removal of the gas mixture corresponding to the ambient atmosphere; or **in that**, prior to supply of the oxygen, the gas mixture corresponding to the ambient atmosphere present in the closed chamber is removed up to the generation of a preset underpressure.

11. A method in accordance with any one of the preceding claims, **characterized in that** the oxygen supplied has a degree of purity of at least 50%, in particular at least 90%, preferably at least 95%; and/or **in that** the oxygen atmosphere during the storage has a degree of purity of at least 50%, in particular at least 90%, preferably at least 95%.

12. A method in accordance with any one of the preceding claims, **characterized in that** the fresh meat is introduced into the sealable chamber in the chilled state, in particular at a temperature in the range from approximately 0°C to 3°C and **in that** the temperature in the sealed chamber is preferably maintained during the storage in a range of approximately -5° to +3°C.

13. An apparatus for carrying out the method in accordance with any one of the preceding claims,
**characterized by**
a housing (1) in which there are provided: an opening (2) which can be sealed in an air-tight manner for introducing/ removing the fresh meat (29) on a carrier rack (23), an inlet opening (10) which can be connected to at least one oxygen supply (14, 12) and in particular opens at the top side and at least one removal opening (15) which is in particular arranged on the top side and ensures a defined outflow from the interior of the housing (1),
as well as by an electronic control unit via which, firstly, the temperature of the oxygen supplied via the inlet opening can be selected and whose supply speed can be set or controlled to be so low that the fresh meat does not freeze and, secondly, the removal rate of the oxygen which can be removed via the removal opening is set or controlled to be so low that, firstly, the fresh meat located inside the housing does not freeze and, secondly, the oxygen permeating the treated fresh meat is removable from the fresh meat without bubble formation.

14. An apparatus in accordance with claim 13, **characterized in that** a controllable supply valve, in particular a solenoid valve (4), is provided at the inlet opening (10) for supplying oxygen, via which valve the oxygen supply quantity per unit time and/or the speed of supply can be controlled; and/or **in that** a controllable removal valve, in particular a solenoid valve (6), is provided at the removal opening (15) for removing the high-pressure oxygen atmosphere, via which the oxygen removal quantity per unit time and/ or the speed of removal can be controlled.

15. An apparatus in accordance with any one of claims 13 or 14, **characterized in that** the opening cross-section of the supply valve (4) and/or of the removal valve (6) can be controlled via the electronic control unit (9); and/or **in that** the housing (1) is rectangular or cylindrical, with the opening (2) for introducing/ removing the fresh meat (29) being provided in each case in the end faces of the housing (1).

16. An apparatus in accordance with any one of the claims 13 to 15, **characterized in that** a bayonet closure is provided for the air-tight and pressure-tight sealing of the housing door (3); and/or **in that** a bayonet closure is provided for the air-tight and pressure-tight sealing of the opening (2) by the housing door (3); and/or **in that** the oxygen is supplied via an oxygen distribution apparatus disposed within or outside the housing (1), which distribution apparatus consists in particular of tube elements arranged in a star shape, i.e. radially projecting.

17. An apparatus in accordance with any one of the claims 13 to 16, **characterized in that** the housing (1) has an evacuation opening (32), preferably disposed on the top, for removing the gas mixture corresponding to the ambient atmosphere; and/or **in that** an oxygen tank (14) disposed outside the housing (1) is provided to store oxygen, said tank being connected to the inlet opening (10) in particular via an oxygen vaporizer (12) and via a pipe (11, 13) which can be closed by means of the solenoid valve (4).

## Revendications

1. Procédé de traitement de viande fraîche, en particulier pour conserver de la viande fraîche de boeuf, porc, veau, agneau, gibier, volaille, cheval, poisson, charcuterie crue et jambon, dans lequel la viande fraîche est stockée dans une enceinte susceptible d'être fermée de façon étanche à l'air, après alimentation d'oxygène dans une atmosphère constituée essentiellement d'oxygène, pendant une période prédéterminée et sous une pression supérieure à la pression atmosphérique,
**caractérisé en ce que**
lors de l'alimentation de l'oxygène, on choisit sa température et on règle ou on régule la vitesse d'alimentation aussi faible qu'il ne se produit pas de congélation de la viande fraîche,
pendant le stockage on choisit la pression aussi élevée et la durée de stockage aussi longue que la viande fraîche est traversée complètement par l'oxygène, et
lors de l'évacuation de l'oxygène, on règle ou on régule la vitesse d'évacuation aussi faible que d'une part il ne se produit pas de congélation de la viande fraîche et que d'autre part l'oxygène traversant la viande fraîche traitée est évacué hors de la viande fraîche sans formation de bulles.

2. Procédé selon la revendication 1, **caractérisé en ce que** pendant le stockage, il ne s'effectue pas d'alimentation et d'évacuation d'oxygène et/ou **en ce que** la viande fraîche est traitée en morceaux coupés, en particulier en portions de consommation, et/ou **en ce que** lors de l'alimentation de l'oxygène on mesure la pression régnant à l'intérieur de l'enceinte fermée, et après avoir atteint une pression maximale prédéterminée, on termine l'alimentation en oxygène.

3. Procédé selon l'une des revendications précédentes, **caractérisé en ce que** l'on amène l'atmosphère d'oxygène dans l'enceinte fermée à une pression d'environ 10 à 20 bar, en particulier d'environ 13 à 17 bar, de préférence à environ 15 bar, et on la maintient pendant la durée de stockage, et/ou **en ce que** lors de l'alimentation en oxygène on augmente la pression sensiblement linéairement, en particulier en continu ou en plusieurs étages, de préférence en un nombre compris entre 10 et 20, en particulier en environ 15 étages, et/ou **en ce que** l'on alimente l'oxygène, en particulier en continu, pendant une période d'environ 45 minutes à 4 heures, en particulier d'environ 1 à 3 heures, de préférence de 1 à 2 heures.

4. Procédé selon l'une des revendications précédentes, **caractérisé en ce que** pour une enceinte d'un volume d'environ 100 litres, on alimente au maximum environ 70 litres d'oxygène par minute, en particulier au maximum environ 30 à 60 litres d'oxygène par minute ou moins, et/ou **en ce que** pour une enceinte d'un volume d'environ 15000 litres, on alimente au maximum environ 2500 litres d'oxygène par minute, avantageusement au maximum environ 1400 litres d'oxygène par minute, en particulier au maximum environ 1200 litres d'oxygène par minute ou moins.

5. Procédé selon l'une des revendications précédentes, **caractérisé en ce que** l'on choisit une durée de stockage d'environ 5 à 15 heures, en particulier d'environ 7 à 12 heures, de préférence d'environ 8 à 10 heures, et/ou **en ce que** pour de la viande stockée préalablement, on choisit la durée de stockage plus courte que celle pour une viande fraîchement abattue.

6. Procédé selon l'une des revendications précédentes, **caractérisé en ce que** lors de l'évacuation de l'oxygène, on baisse la pression sensiblement linéairement, en particulier en continu ou en plusieurs étages, de préférence en un nombre compris entre 10 et 20, en particulier en environ 20 étages, et/ou **en ce que** lors de l'évacuation de l'oxygène, on prévoit sensiblement le même temps, en particulier environ 8 à 20 minutes, de préférence environ 13 à 16 minutes pou chaque bar de baisse de pression.

7. Procédé selon l'une des revendications précédentes, **caractérisé en ce qu'**après avoir atteint une pression minimale prédéterminée de préférence comprise entre 0,5 et 1,2 bar, en particulier d'environ 0,7 bar, celle-ci est supprimée avec un gradient plus élevé.

8. Procédé selon l'une des revendications précédentes, **caractérisé en ce que** l'on évacue l'oxygène en environ 1 à 4 heures, en particulier en environ 3 heures, et/ou **en ce que** l'alimentation et/ou l'évacuation de l'oxygène est effectuée via une valve d'entrée ou de sortie commandée.

9. Procédé selon les revendications 7 et 8, **caractérisé en ce qu'**après avoir atteint la pression minimale, on ouvre sensiblement complètement la valve de sortie et/ou on ouvre une autre valve de sortie présentant une grande section d'ouverture.

10. Procédé selon l'une des revendications précédentes, **caractérisé en ce que** l'on alimente l'oxygène dans l'enceinte fermée sans évacuation préalable du mélange gazeux correspondant à l'atmosphère ambiante, ou **en ce qu'**avant alimentation de l'oxygène on évacue le mélange gazeux contenu dans l'enceinte fermée et correspondant à l'atmosphère ambiante, jusqu'à l'établissement d'une dépression prédéterminée.

11. Procédé selon l'une des revendications précédentes, **caractérisé en ce que** l'oxygène alimenté possède un degré de pureté d'au moins 50 %, en particulier d'au moins 90 %, de préférence d'au moins 95 %, et/ou **en ce que** l'atmosphère d'oxygène pendant le stockage possède un degré de pureté d'au moins 50 %, en particulier d'au moins 90 %, de préférence d'au moins 95 %.

12. Procédé selon l'une des revendications précédentes, **caractérisé en ce que** l'on introduit dans l'enceinte fermée la viande fraîche à l'état refroidi, en particulier à une température dans la plage d'environ 0°C à 3°C, et **en ce que** pendant le stockage on maintient la température dans l'enceinte fermée de préférence dans une plage d'environ -5°C à +3°C.

13. Appareil pour mettre en oeuvre le procédé selon l'une des revendications précédentes,
**caractérisé par**
un boîtier (1) dans lequel sont prévues une ouverture (2) susceptible d'être fermée de façon étanche à l'air pour introduire/extraire la viande fraîche (29) sur un bâti porteur (23), une ouverture d'entrée (10) susceptible d'être raccordée à au moins une alimentation en oxygène (14, 12) et débouchant en particulier du côté plafond, et au moins une ouverture d'évacuation (15) assurant une évacuation définie hors du volume intérieur du boîtier (1) et prévue en particulier du côté plafond, ainsi que par une unité de commande électronique via laquelle d'une part la température de l'oxygène alimenté par l'ouverture d'entrée peut être ainsi choisie et sa vitesse d'alimentation peut être réglée ou régulée aussi faible qu'il ne se produit pas de congélation de la viande fraîche, et que d'autre part la vitesse d'évacuation de l'oxygène susceptible d'être évacué par l'ouverture d'évacuation peut être réglée ou régulée aussi faible que d'une part il ne se produit pas de congélation de la viande fraîche située à l'intérieur du boîtier et que d'autre part l'oxygène traversant la viande fraîche traitée peut être évacué hors de la viande fraîche sans formation de bulles.

14. Appareil selon la revendication 13, **caractérisé en ce qu'**au niveau de l'ouverture d'entrée (10) destinée à alimenter l'oxygène il est prévu une valve d'alimentation à régulation, en particulier une valve magnétique (4) via laquelle la quantité alimentée par unité de temps et/ou la vitesse d'alimentation de l'oxygène est réglable, et/ou **en ce qu'**au niveau de l'ouverture d'évacuation (15) destinée à évacuer l'atmosphère d'oxygène sous haute pression il est prévu une valve d'évacuation à régulation, en particulier une valve magnétique (6) via laquelle la quantité évacuée par unité de temps et/ou la vitesse d'évacuation de l'oxygène est réglable.

15. Appareil selon l'une ou l'autre des revendications 13 et 14, **caractérisé en ce que** la section d'ouverture de la valve d'alimentation (4) et/ou de la valve d'évacuation (6) est réglable au moyen de l'unité de commande électronique (9), et/ou **en ce que** le boîtier (1) est réalisé rectangulaire ou cylindrique, l'ouverture (2) pour introduire/extraire la viande fraîche (29) étant prévue respectivement dans les faces frontales du boîtier (1).

16. Appareil selon l'une des revendications 13 à 15, **caractérisé en ce qu'**il est prévu une obturation à baïonnette pour la fermeture étanche à l'air et à la pression de la porte de boîtier (3) et/ou **en ce qu'**il est prévu une obturation à baïonnette pour la fermeture étanche à l'air et à la pression de l'ouverture (2) traversant la porte de boîtier (3), et/ou **en ce que** l'alimentation en oxygène s'effectue via un dispositif de répartition d'oxygène agencé à l'intérieur ou à l'extérieur du boîtier (1) et constitué en particulier par des éléments tubulaires agencés en forme d'étoile, c'est-à-dire déployés radialement.

17. Appareil selon l'une des revendications 13 à 16, **caractérisé en ce que** pour l'évacuation du mélange gazeux correspondant à l'atmosphère ambiante, le boîtier (1) présente une ouverture d'évacuation (32) ménagée de préférence au plafond, et/ou **en ce que** pour stocker de l'oxygène il est prévu un réservoir à oxygène (14) agencé à l'extérieur du boîtier (1) et relié à l'ouverture d'entrée (10) en particulier via un vaporisateur d'oxygène (12) et via une conduite tubulaire (11, 13) susceptible d'être fermée au moyen de la valve magnétique (4).
